# NEUE EUROPÄISCHE PATENTSCHRIFT

(11) **EP 2 898 967 B2**
(45) Veröffentlichungstag und Bekanntmachung des Hinweises auf die Entscheidung über den Einspruch: **03.03.2021**
(45) Hinweis auf die Patenterteilung: 25.01.2017
(21) Anmeldenummer: 14000278.3
(22) Anmeldetag: 27.01.2014
(51) Int. Cl.: B23B 27/04, B23B 27/10, B23B 29/04

(54) **Abstechhalter und Herstellverfahren des Abstechhalters**
Cutting tool holder, production method and use of a generative manufacturing device for manufacturing the cutting tool holder
Support d'outil de coupe, procédé de fabrication et utilisation d'un dispositif de fabrication génératif pour la fabrication d'un support d'outil de coupe

(43) Veröffentlichungstag der Anmeldung: 29.07.2015
(73) Patentinhaber: Rosswag GmbH, 76327 Pfinztal (DE)
(72) Erfinder: Graf, Gregor, 75196 Remchingen (DE); Schlecht, Peter, D - 76327 Pfinztal (DE); Donisi, Sven, D - 76327 Pfinztal (DE)
(74) Vertreter: Drobnik, Stefanie

(56) Entgegenhaltungen:
- EP-A1- 0 791 420
- EP-A1- 2 821 167
- WO-A1-2008/002145
- WO-A2-2012/148233
- DE-A1-102011 016 148
- DE-B3- 10 252 040
- DE-B4-102004 032 093
- JP-A- H07 227 702
- JP-A- 2010 105 084
- JP-U- S48 107 176
- US-A- 3 798 725
- US-A- 4 863 538
- US-A- 5 833 403
- US-A1- 2007 283 786
- US-A1- 2010 178 116
- US-A1- 2012 230 780
- US-B1- 6 215 093
- US-B2- 6 705 805
- US-B2- 7 063 487
- US-B2- 7 134 813
- US-B2- 7 959 384
- US-B2- 9 346 103

## Beschreibung

Die nachfolgende Erfindung bezieht sich auf einen Abstechhalter und auf ein Herstellverfahren für den Abstechhalter.

Bei der spanenden Bearbeitung von Werkstücken ist das Schneidwerkzeug stets zu kühlen, um eine Überhitzung und damit vorzeitigen Verschleiß der Schneide zu verhindern. Es ist bekannt, dazu Kühlschmierstoffe einzusetzen, die dem Schneidwerkzeug zugeführt werden. Die Kühlschmierstoffe bestehen hauptsächlich aus Wasser und enthalten bestimmte Additive, etwa zur Schmierung, Veränderung der Benetzungseigenschaften und/oder Antischäummittel. Frühe Systeme arbeiteten mit großen Volumenströmen und einer örtlich vergleichsweise undefinierten Kühlschmierstoffausbringung, etwa über flexible Schläuche, die an das Schneidwerkzeug heran geführt wurden.

Diese Art der Kühlung hat jedoch den Nachteil, dass der Kühlschmierstoffverbrauch sehr hoch ist und die Kühlung wenig effektiv ist, da der Ort der Wärmeentwicklung, nämlich die Schneide selbst, nur unzureichend mit Kühlschmierstoff versorgt wird; abfliegende und/oder sich auf dem Schneidwerkzeug absetzende Späne können hierbei den Kühlschmiermittelstrahl ablenken und so die Kühlung der Schneide beeinträchtigen. Beim Einstechen enger Nuten oder beim Abstechen kann es sogar passieren, dass die Kühlschmiermittelzufuhr zur Schneide nahezu zum Erliegen kommt.

Es wurden daher Schneidwerkzeughalter entwickelt, die es erlauben, Kühlschmierstoff unter Hochdruck direkt zum Schneidwerkzeug zu fördern.

Ein solches Schneidwerkzeug ist aus der DE 20 2012 004 900 U1 bekannt. Dort hat der Schneidwerkzeughalter einen Kühlschmiermittelkanal, der eine Zuführung von Kühlschmiermittel direkt zum Schneidwerkzeugsitz ermöglicht. Der Schneideinsatz bzw. die Schneidplatte hat an seiner Oberfläche eine rinnenartige Vertiefung, durch die das Kühlschmiermittel aus einem inneren Kanal, der durch eine einfache Bohrung im Halterkörper gebildet wird, weiter zur Schnittkante gefördert werden kann, wodurch die Späne unterspült und dadurch weggespült werden können.

Zwar kann dort Wärme direkt an der Schneide entzogen werden, jedoch unterstützt die Kühlschmiermittelzufuhr den Spanabtransport nur unzureichend, da der Kühlschmiermittelstrom in der Rinne des Schneideinsatzes nur mit geringem Druck fließt.

Es wurden daher Schneidwerkzeughalter entwickelt, bei denen der Kühlmittelauslass erst kurz vor dem Schneideinsatz erfolgt. So ist ein Abstechschwert aus der WO 2013 132480 A1 bekannt, bei dem auf einer Seitenfläche eine Fluidzuführungsbohrung vorliegt, die über eine Kapillarbohrung, die sich entlang der Längsachse des Schwerts erstreckt, mit einer Auslassöffnung direkt neben dem Schneideinsatz verbunden ist. Die Fluidzuführungsbohrung ist hierbei einseitig mit einem Stopfen verschlossen, während die andere Seite mit einer werkzeugmaschinenseitigen Kühlschmierstoffzuführung verbunden ist. Der Fluidzuführungskanal wird dort durch zwei fluidisch verbundene Bohrungen gebildet, die in einem Winkel zueinander stehen, was zu Strömungsverlusten führt.

Darüber hinaus ist unter der Bezeichnung Coroturn^{®} QD ein Abstechschwert des Herstellers Sandvik Coromant bekannt (siehe Produktkatalog "Neue Werkzeuge und Lösungen", S.21, 2014), das im Bereich des Schneideinsatzes zwei Austrittsöffnungen für Kühlschmierstoff hat, die an der Stirnfläche des Abstechschwerts vorliegen; eine Austrittsöffnung liegt über und die andere unter dem Schneideinsatz. Hierbei erstreckt sich von einer zentralen Zuführöffnung aus jeweils ein Kanal zu den Austrittsöffnungen, wobei die Kanäle durch Bohrungen in dem Schwertkörper gebildet werden.

Ein Abstechhalter ist aus US 2010/0178116 A1 bekannt.

Ausgehend von diesem Stand der Technik liegt der vorliegenden Erfindung die Aufgabe zu Grunde, einen verbesserten Schneidwerkzeughalter zu schaffen, der eine verbesserte lokale Kühlung des Schneidwerkzeugs und einen verbesserten Spanabtransport erlaubt.

Diese Aufgabe wird durch einen Abstechhalter mit den Merkmalen des unabhängigen Anspruchs 1 gelöst.

Darüber hinaus ergibt sich die Aufgabe, ein Herstellverfahren für den Abstechhalter zu schaffen, mit dem dieser in wenigen Prozessschritten kostengünstig herstellbar ist.

Diese Aufgabe wird durch ein Herstellverfahren mit den Merkmalen des Anspruchs 6 gelöst.

Bevorzugte Ausführungsbeispiele der Vorrichtung und des Verfahrens werden jeweils durch die Unteransprüche beschrieben.

Der erfindungsgemäße Abstechhalter weist in einer ersten Ausführungsform einen Halterkörper auf, der einen Schneidwerkzeugsitz hat. Der Abstechhalter hat darüber hinaus einen Einspannabschnitt zum Einspannen des Abstechhalters in einer Werkzeugmaschine. In dem Halterkörper liegt zumindest ein Kühlschmiermittelkanal vor, der erfindungsgemäß vorteilhaft zumindest eine Austrittsöffnung an einer Seitenfläche des Halterkörpers hat, wo dieser schräg aus der Seitenfläche austritt. Die Austrittsöffnung ist hierbei so ausgerichtet, dass ein Kühlschmiermittelstrahl, der aus diesem Kühlschmiermittelkanal kommt, auf eine Fläche eines Schneidwerkzeugs, die in dem Schneidwerkzeugsitz liegt, gerichtet werden kann.

"Schneidwerkzeug" meint hierin einen auswechselbaren Schneideinsatz, insbesondere eine Wendeschneidplatte, die beispielsweise aus Hartmetall, Diamant oder Keramik bestehen kann. "Schräg" meint, dass der Kühlschmiermittelkanal nicht normal zu der Oberfläche austritt.

Die an der Seitenfläche des Halterkörpers vorliegende Austrittsöffnung ist dazu vorgesehen, einen Kühlschmiermittelstrahl von der Seite her auf den Schneidwerkzeugkörper zu richten, was sowohl dazu beiträgt, den Spanabtransport zu verbessern, als auch, den Schneidwerkzeugkörper selbst kühler zu halten, was auch der Wärmeausdehnung des Abstechhalters entgegen wirkt.

Der erfindungsgemäße Abstechhalter kann ein Abstechschwert, das einen sehr flachen, plattenförmigen Halterkörper hat und insbesondere für große Abstechdurchmesser geeignet ist, oder einen Abstechhalter für kleine Durchmesser bilden, wobei der Halterkörper beispielsweise mit einem länglichen Werkzeugschaft verbunden sein kann, um diesen mit der Werkzeugmaschine zu koppeln. Mit Werkzeugmaschine sind hier in erster Linie Drehmaschinen bzw. Drehautomaten gemeint; der Werkzeughalter kann aber auch in mehrachsigen Bearbeitungszentren eingesetzt werden. Der Abstechhalter kann mit einer Werkzeugaufnahme der Werkzeugmaschine verschraubt werden, wobei Durchtrittsbohrungen für Spannschrauben vorgesehen sein können; alternativ kann er aber auch in einen Klemmhalter eingespannt werden, sodass der erfindungsgemäße Abstechhalter quasi von einem übergeordneten Halter aufgenommen wird, wobei der übergeordnete Halter beispielsweise über ein formschlüssiges Schnellbefestigungssystem mit der Werkzeugaufnahme der Werkzeugmaschine gekoppelt werden kann.

Der erfindungsgemäße Abstechhalter hat mehr als eine seitliche Austrittsöffnung für Kühlschmiermittel; es sind an voneinander abgewandten Seitenflächen des Abstechhalters Austrittsbohrungen vorgesehen, die aus entgegengesetzten Richtungen Kühlschmierstoff auf das Schneidwerkzeug ausbringen. Die Richtung wird hierbei maßgeblich durch die Ausrichtung der Kanalachse bestimmt. Es kann aber auch vorgesehen sein, dass in die Austrittsbohrung eine winkelverstellbare Düse eingesetzt wird, die es erlaubt, die Ausbringungsrichtung zu verändern.

In einer weiteren Ausführungsform kann der Halterkörper eine oder mehrere Zuführöffnung(en) für Kühlschmiermittel aufweisen, die bevorzugt in dem Einspannabschnitt vorliegt/vorliegen, wobei die Zuführöffnung(en) mit der Kühlschmiermittelquelle fluidisch verbindbar ist/sind. Der Kühlschmiermittelkanal erstreckt sich hierbei von der Zuführöffnung zu der Austrittsöffnung. Über die Zuführöffnung ist es möglich, den erfindungsgemäßen Schneidwerkzeughalter an ein Kühlschmiermittelversorgungssystem der Werkzeugmaschine anzukoppeln; dies kann insbesondere gleichzeitig mit der mechanischen Ankopplung erfolgen.

Der Kühlschmiermittelkanal muss sich hierbei nicht entlang der kürzesten Verbindung zwischen Zuführöffnung und Austrittsöffnung erstrecken, sondern sein Verlauf kann auch im Hinblick auf eine bestimmte zu erreichende Mindeststeifigkeit angepasst werden. Ein Kanal, der nicht gerade verläuft kann aber auch notwendig werden, wenn Bohrungen oder ähnliches den direkten Weg "versperren"; der Kühlschmiermittelkanal kann hierbei auch eine oder mehrere Umlenkungen aufweisen, die vorteilhafter Weise verrundet sein können. Durch die Verrundung der Umlenkungen wird ein geringerer Druckverlust erreicht, was zu einer energiesparenden Betriebsweise beiträgt.

Der Abstechhalter kann gemäß einer noch weiteren Ausführungsform einen oder mehrere obere Kühlschmiermittelkanäle aufweisen, der/die jeweils in einer oberen Austrittsöffnung mündet/münden. Die obere(n) Austrittsöffnung(en) ist/sind so ausgerichtet, dass ein Kühlschmiermittelstrahl von oben auf eine Schnittkante eines Schneidwerkzeugs, das in dem Schneidwerkzeugsitz aufgenommen ist, gerichtet werden kann. Alternativ oder zusätzlich kann der Abstechhalter auch einen oder mehrere untere Kühlschmiermittelkanal/-kanäle aufweisen, der/die jeweils in einer unteren Austrittsöffnung mündet/münden. Die untere(n) Austrittsöffnung(en) sind hierbei so ausgerichtet, dass ein Kühlschmiermittelstrahl von oben auf eine Schnittkante eines Schneidwerkzeugs, das in dem Schneidwerkzeugsitz aufgenommen ist, gerichtet werden kann.

Diese Ausführungsform ermöglicht es vorteilhaft, den Schneidwerkzeugkörper von der Seite zu kühlen und zusätzlich die Schnittzone bzw. Schnittkante von unten und oben. Die Überhitzung des gesamten Schneidwerkzeugvolumens kann so effektiver als bisher verhindert werden, was die Standzeit des Schneidwerkzeugs erhöht und die Fertigung unter Verwendung des erfindungsgemäßen Abstechhalters sehr kostengünstig macht. Zudem kann der Kühlschmierstoffverbrauch reduziert werden, da kontrolliert kleine Mengen Kühlschmierstoff unter hohem Druck lokal ausgebracht werden. Der oder die oberen und/oder unteren Kühlschmiermittelkanal/-kanäle können als eigenständige Kanäle innerhalb des Halterkörpers verlaufen, wobei sie sich insbesondere "sternförmig" von der Zuführöffnung zu den jeweiligen Austrittsöffnungen erstrecken können.

Es kann aber auch vorgesehen sein, dass der obere Kühlschmiermittelkanal und/oder der untere Kühlschmiermittelkanal aus einer Verzweigung des ersten Kühlschmiermittelkanals hervorgeht/hervorgehen. Hierbei führt von der Zuführöffnung beispielsweise zunächst ein einziger Kanal weg, der sich immer weiter verzweigt und so eine Vielzahl von Austrittsöffnungen mit Kühlschmiermittel versorgen kann. Die Verzweigung/Verzweigungen liegen hierbei innerhalb des Halterkörpers vor und können vorteilhaft eine strömungsgünstige Geometrie aufweisen und haben insbesondere keine plötzlichen Durchmessersprünge oder Totwassergebiete.

Einer oder mehrere der Kühlschmiermittelkanäle kann/können alternativ o-der zusätzlich einen nicht-kreisförmigen Querschnitt haben, etwa einen rechteckigen Querschnitt, am meisten bevorzugt einen flach rechteckigen Querschnitt.

"Flach" meint hierin ein Breite/Höhe-Verhältnis von 1,2 und größer. Über rechteckige Kanalquerschnitte kann auch bei einem extrem flachen Halterkörper eine vergleichsweise große durchströmte Fläche realisiert werden, wohingegen bei stets runden Bohrungen die durchströmte Fläche direkt mit der Dicke des Halterkörpers korreliert. Der Kanalquerschnitt kann auch verrundet oder insbesondere oval sein, wobei die lange Achse bevorzugt normal zu dem Halterkörper ausgerichtet sein kann; bei dieser Ausrichtung wird ein mechanisch sehr belastbarer Kanal geschaffen, der auch größere von außen auf den Halterkörper einwirkende Druckbelastungen und/oder der Einwirkung von Schnittkräften widersteht.

Des Weiteren kann/können die untere Austrittsöffnung und/oder die obere Austrittsöffnung an einer Stirnfläche des Halterkörpers vorliegen. Alternativ oder zusätzlich kann der Halterkörper im Wesentlichen plattenförmig sein.

Ein plattenförmigen Halterkörper liegt beispielsweise bei einem Abstechschwert vor; der Halterkörper kann aber auch nur teilweise plattenförmig sein; etwa nur an seinem zu dem Werkstück gerichteten Ende, während er am Einspannende eine standardisierte Geometrie zur Aufnahme in der Werkzeugmaschine hat; etwa einen schaftförmigen Halter mit polygonalem Querschnitt.

In einer beispielhaften Ausführungsform liegt die seitliche Austrittsöffnung unter dem Schneidwerkzeugsitz; zusätzlich hat der Abstechhalter eine stirnseitige Austrittsöffnung, die über dem Schneidwerkzeugsitz liegt und eine stirnseitige Austrittsöffnung unter dem Schneidwerkzeugsitz. Hierbei erstreckt sich von der Zuführöffnung aus ein oberer Kanalast zu der oberen stirnseitigen Austrittsöffnung und ein unterer Kanalast, der sich verzweigt, zu der seitlichen und der unteren stirnseitigen Austrittsöffnung. Die Kanalachsen der Kühlschmiermittelkanäle, die zu den stirnseitigen Austrittsöffnungen führen, können hierbei so ausgerichtet sein, dass ein austretender Kühlmittelstrahl auf die Schnittkante des Schneidwerkzeugs gerichtet ist; die stirnseitigen Austrittsöffnungen sorgen für eine optimale Kühlung der Schnittzone und den Spanabtransport während die seitliche Austrittsöffnung Kühlschmiermittel zur Kühlung des Schneidwerkzeugkörpers bereitstellt. Bitte prüfen, ob korrekt; ggf. ergänzen.

Schließlich kann sich vom Schneidwerkzeugsitz ein Schlitz in dem Halterkörper erstrecken, dessen Erstreckungsrichtung parallel zu einer Aufnahmeebene des Schneidwerkzeugs ist, wobei der Schlitz Elastizität zum Spannen des Schneidwerkzeugs in den Schneidwerkzeugsitz bereitstellt.

Der Schlitz dient hierbei dazu, das an den Schlitz angrenzende Volumen des Halterkörpers zu "schwächen", um es leichter elastisch verformen zu können. Unter Einwirkung einer Spannvorrichtung, etwa einer Spannschraube, die normal zu dem Schlitz in den Halterkörper eingedreht ist, verengt sich der Schlitz und erlaubt es so, das Schneidwerkzeug in dem Schneidwerkzeugsitz festzuklemmen. Der Schlitz kann an seinem dem Schneidwerkzeugsitz abgewandten Ende eine Verrundung aufweisen, die beispielsweise durch eine Bohrung, die parallel zur Schlitzebene verläuft, gebildet werden kann; dies mindert zudem die Kerbwirkung des Schlitzendes.

Das erfindungsgemäße Herstellverfahren für den Abstechhalter wird unter Verwendung einer generativen Fertigungsvorrichtung ausgeführt. Es umfasst die folgenden Schritte:
a) in die generative Fertigungsvorrichtung Laden eines 3D-Volumendatensatzes, der den Halterkörper des Abstechhalters beschreibt,
b) Bereitstellen eines pulverförmigen Ausgangsmaterials,
c) schrittweise Herstellen eines Materialzusammenhalts des pulverförmigen Ausgangsmaterials, dabei schrittweise Herstellen des Halterkörpervolumens mit dem zumindest einem Kühlschmiermittelkanal, der eine Austrittsöffnung hat, die an einer Seitenfläche des Halterkörpers schräg aus der Seitenfläche austritt.

Über generative Fertigungsverfahren, die in Abgrenzung zu den trennenden oder urformenden Fertigungsverfahren auch additive Fertigungsverfahren genannt werden, können selbst komplexeste Geometrien mit Hinterschnitten, verborgenen Innenteilen o. ä. hergestellt werden, die mittels Gießen und/oder spanender Bearbeitung nicht fertigbar wären.

Ein solches mit konventioneller Fertigungstechnik nur unter erhöhtem Aufwand oder gar nicht fertigbares Bauteil ist auch der erfindungsgemäße Abstechhalter.

Einen Kühlschmiermittelkanal, der schräg aus einer Seitenfläche austritt und sich bis zu einem zentralen Zuführpunkt erstreckt, wäre mit herkömmlicher Bohrtechnik in den Durchmesserbereichen nicht herstellbar, da mindestens drei Bohrungen dafür nötig wären; insbesondere die hydraulische Verbindung der schrägen "Bohrung", die die seitliche Austrittsöffnung bildet, und des Kühlschmiermittelkanals, der zu der Zuführöffnung führt, ist nahezu unmöglich, da die zu fertigenden Einstichbreiten oft unter 2 mm betragen und der Halterkörper daher sogar noch dünner ist. Auch die zu bohrenden Längen übersteigen bei langen Halterkörpern, etwa Abstechschwertern häufig wirtschaftlich erreichbare Durchmesser/LängenVerhältnisse.

Unter Verwendung generativer Fertigungstechnik können beliebig viele Kühlschmiermittelkanäle mit nahezu beliebig vielen Austrittsöffnungen ohne Zusatzkosten hergestellt werden; hierbei ist es sogar möglich die inneren Kanalverzweigungen strömungsmechanisch optimal zu gestalten; insbesondere können Totwassergebiete, wie sie im Stand der Technik oft durch Bildung eines Kanals durch mehrere "gestückelte" Bohrungen entstehen, vermieden werden. Auch die Kanallänge ist nicht mehr begrenzt; so können beliebige Durchmesser/Längen-Verhältnisse erreicht werden, die bei Einsatz konventioneller Bohrtechnik nur unter Einsatz extrem teurer Tiefbohrtechnik zu erreichen wären.

Es ist sogar denkbar, einen nicht runden Kanalquerschnitt zu realisieren, etwa quadratisch oder flach quaderförmig; dadurch kann eine vergleichweise große durchströmte Querschnittsfläche auch in extrem dünnen Halterkörpern erreicht werden, wohingegen der durchströmte Querschnitt bei bekannten Lösungen direkt durch die Dicke des Halterkörpers begrenzt würde.

Mit "3D-Volumendatensatz" ist hierein ein CAD-Volumenmodell des Halterkörpers gemeint, das nicht nur die Hüllflächen beschreibt, sondern quasi als "Volumenpixel" das Volumen. Die Volumendaten können auch erst in der generativen Fertigungsvorrichtung erzeugt werden, wobei die 3D-Daten etwa als Flächenmodell im STL-Format zur Verfügung gestellt werden und vollständig umschlossene Flächenzüge von der generativen Fertigungsvorrichtung als Volumen interpretiert werden. Um einen Volumenkörper zu erhalten wird zunächst in einer Ebene der Materialzusammenhalt vorgegebener Punkte hergestellt und dann Ebene für Ebene fortgefahren.

Hierdurch kann das Bauteil quasi in einem Schritt, mit geringem Nacharbeitsaufwand oder sogar nacharbeitsfrei und mit hoher Genauigkeit hergestellt werden.

Zum Herstellen des Materialzusammenhalts kann das pulverförmige Ausgangsmaterial aufgeschmolzen werden oder aber der Materialzusammenhalt wird durch Sintern erzeugt, wobei kein Aufschmelzen stattfindet.

Bei dem pulverförmigen Ausgangsmaterial kann es sich insbesondere um ein Metallpulver handeln. Die generative Fertigungsvorrichtung kann eine Vorrichtung zum selektiven Laserschmelzen oder selektiven Lasersintern sein. Die genannten Fertigungsvorrichtungen sind jedoch nur Beispiele; das erfindungsgemäße Herstellverfahren kann auch unter Verwendung anderer generativer Fertigungsvorrichtungen durchgeführt werden, die beispielsweise Elektronenstrahlen oder andere hochenergetische Strahlung als Energiequelle verwenden.

Diese und weitere Vorteile werden durch die nachfolgende Beschreibung unter Bezug auf die begleitenden Figuren dargelegt. Der Bezug auf die Figuren in der Beschreibung dient der Unterstützung der Beschreibung und dem erleichterten Verständnis des Gegenstands. Die Figuren sind lediglich schematische Darstellungen von Ausführungsbeispielen der Erfindung.

Es zeigen:
- **Fig. 1**: eine perspektivische Teilansicht des Abstechhalters.
- **Fig. 2**: eine Draufsicht auf den Abstechhalter.

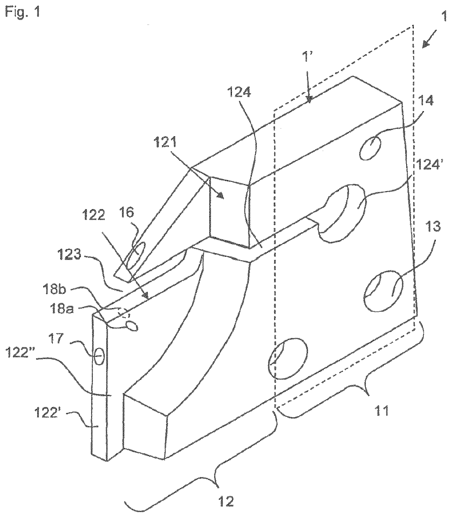

In **Fig. 1** ist der Halterkörper 1' längs geschnitten dargestellt, wobei die Kühlschmiermittelkanäle nicht in der Schnittebene liegen, sondern in die Bildebene hinein "tiefer" in dem Halterkörper 1' liegen. Der Halterkörper 1' hat zwei Abschnitte; den Einspannabschnitt 11, der zur Kopplung mit der Werkzeugmaschine vorgesehen ist, und den Aufnahmeabschnitt 12, in den ein Schneideinsatz aufnehmbar ist.

Der Abstechhalter 1 bzw. der Halterkörper 1' hat einen Schneidwerkzeugsitz 123, dessen Form und Abmessungen korrespondierend mit einem bestimmten aufzunehmenden Schneidwerkzeug, etwa einer Wendeschneidplatte, ausgebildet sind. Der Schneidwerkzeugsitz 123 kann, um die Kraftübertragung vom Schneidwerkzeug in den Abstechhalter 1 zu verbessern, quer zur Längsrichtung des Halterkörpers 1' auch rinnenartige Vertiefungen haben, was jedoch figurativ nicht gezeigt ist. Das Schneidwerkzeug kann in dem Schneidwerkzeugsitz 123 eingeklemmt werden, indem der an den Schneidwerkzeugsitz 123 angrenzende Schlitz 124 durch eine Spannvorrichtung, die normal zur Erstreckungsrichtung des Schlitzes 124 eine Spannkraft auf den Halterkörper ausübt, elastisch verformt wird. Am "geschlossenen Ende" des Schlitzes 124 liegt eine Endbohrung 124' vor, über die zusätzlich Elastizität bereitgestellt wird und die die Kerbwirkung am Schlitzende verringert.

Der Halterkörper 1' hat Befestigungsbohrungen 13, die auch Gewindebohrungen sein können, was figurativ nicht dargestellt ist. Mit den Befestigungsbohrungen 13 wird der Halterkörper 1' kraftleitend an eine Werkzeugmaschine angekoppelt, was direkt oder indirekt geschehen kann; der Halterkörper 1' kann direkt mit einer Werkzeugaufnahme einer Drehmaschine verbunden werden, zunächst in einen Adapter eingespannt werden oder aber Teil eines Abstechhalters mit länglichem Schaft sein. In dem Einspannabschnitt 11 hat der Halterkörper 1' eine größere Dicke als in dem Aufnahmeabschnitt 12, da die Breite einer zu fertigenden Abstechnut möglichst klein sein soll. Über die Verrundung 121 wird genügend Bewegungsraum für einen Rotationskörper geschaffen, während dem Aufnahmeabschnitt 12 Steifigkeit verliehen wird.

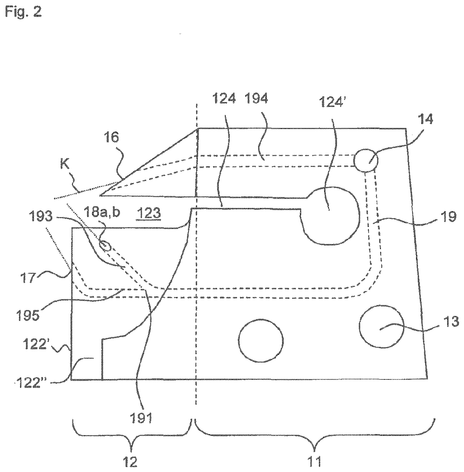

Der Halterkörper 1' hat ferner eine zentrale Zuführöffnung 14 für Kühlschmiermittel, die mit einem Kühlschmiersystem der Werkzeugmaschine gekoppelt wird. Von der Zuführöffnung 14 aus erstrecken sich in dem Halterkörper 1' Kühlschmiermittelkanäle (siehe dazu **Fig. 2**), die jeweils in einer Austrittsöffnung 16, 17, 18a, 18b münden. Der Abstechhalter 1 hat vier Austrittsöffnungen 16, 17, 18ab, 18b; jeweils eine Austrittsöffnung 18a, 18b liegt an den Seitenflächen 122" unter dem Schneidwerkzeugsitz 123 und tritt schräg aus der Oberfläche heraus, wobei je eine Austrittsöffnung 18a, 18b an voneinander abgewandten Wandabschnitten vorliegt, was durch die gestrichelte Darstellung der Austrittsöffnung 18b verdeutlicht wird; zwei Austrittsöffnungen 16,17 liegen an den Stirnflächen 122' des Halterkörpers 1', eine obere Austrittsöffnung 16, die oberhalb des Schneidwerkzeugsitzes 123 vorliegt und eine untere Austrittsöffnung 17. Dadurch, dass der Abstechhalter 1 mehrere Austrittsöffnungen 16, 17, 18a, 18b hat, die auch unterschiedliche Querschnittsflächen und Durchflussraten haben können, wird ein optimaler Spanabtransport und eine optimale Kühlung erreicht; während die untere stirnseitige Austrittsöffnung 17 zur Kühlung der Schnittkante von unten ausgebildet ist, dient die obere stirnseitige Austrittsöffnung 16 auch dem Spanabtransport und die seitlichen Austrittsöffnungen 18a, 18b kühlt den Schneidwerkzeugkörper von seitlich unten, was dazu beiträgt eine Erwärmung des Schneidwerkzeugkörpers und die Übertragung der Wärme in den Halterkörper 1' zu verhindern. Die Längsachsen der austretenden Kühlmittelstrahlen K sind gepunktet dargestellt.

Fig. 2 zeigt eine Seitenansicht der in Fig. 1 gezeigten Teilansicht, wobei die Schnittfläche in der Bildebene liegt. Verdeckte Kanten sind gestrichelt dargestellt, wodurch der Verlauf der Kühlschmiermittelkanäle 19,193,194,195 erläutert werden kann. Von der Zuführöffnung 14 als zentralem Zuführpunkt aus erstreckt sich nach unten hin der Kühlschmiermittelkanal 19, der unterhalb des Schneidwerkzeugsitzes 123 abknickt und parallel zum Schlitz 124 verläuft. Der Kühlschmiermittelkanal 19 verzweigt sich in den Kühlschmiermittelkanal 193, der in den seitlichen Austrittsöffnungen 18a, 18b an der Seitenfläche 122" mündet, und den Kühlschmiermittelkanal 195, der in der unteren Austrittsöffnung 17 an der Stirnfläche 122' mündet. Die Verzweigung 191 ist hierbei strömungsgünstig gestaltet, um den Druckverlust gering zu halten. Von der Zuführöffnung 14 aus erstreckt sich auch der Kühlschmiermittelkanal 194, der in der oberen Austrittsöffnung 16 an dem angeschrägten Abschnitt der Stirnfläche 122' mündet.

Mit konventionellen urformenden und trennenden Fertigungsverfahren, etwa Gießen und/oder Fräsen/Bohren etc. lässt sich der Halterkörper 1' mit der beschriebenen Kanalgeometrie nicht herstellen. Deshalb wird vorgeschlagen, zur Herstellung ein generatives Fertigungsverfahren, insbesondere selektives Laserschmelzen, einzusetzen, wodurch der Halterkörper 1' mit geringer mechanischer Nacharbeit hergestellt werden kann. Der Vorrichtung zum selektiven Laserschmelzen kann quasi der fertige Halterkörper entnommen werden; dieser ist sodann nach dem Reinigen von Resten des pulverförmigen Ausgangsmaterials einsatzfähig.

## Patentansprüche

1. Abstechhalter (1) mit
- einem plattenförmigen Halterkörper (1'), der einen Schneidwerkzeugsitz (123) aufweist und
- einem Einspannabschnitt (11) zum Einspannen des Abstechhalters (1) in einer Werkzeugmaschine, wobei
- in dem Halterkörper (1') zumindest ein erster Kühlschmiermittelkanal (193) vorliegt, der zumindest eine Austrittsöffnung (18a,18b) an einer Seitenfläche (122") des Halterkörpers aufweist und schräg aus der Seitenfläche (122") austritt, wobei jeweils eine Austrittsöffnung (18a, 18b) an voneinander abge wandten Wandabschnitten der Seitenflächen (122") unter dem Schneidwerkzeugsitz (123) vorliegt,
- wobei die Austrittsöffnung (18a,18b) so ausgerichtet ist, dass ein Kühlschmiermittelstrahl (K), der aus dem Kühlschmiermittelkanal (193) austritt, seitlich von unten auf eine Fläche eines Schneidwerkzeugs, das in dem Schneidwerkzeugsitz (123) aufgenommen ist, richtbar ist,
und wobei der Halterkörper (1')
- zumindest einen oberen Kühlschmiermittelkanal (194) aufweist, der in einer oberen Austrittsöffnung (16) mündet, die an einer Stimfläche (122') des Halterkörpers (1') vorliegt und so ausgerichtet ist, dass ein Kühlschmiermittelstrahl, der aus dem Kühlschmiermittelkanal (194) austritt, von oben auf eine Schnittkante eines Schneidwerkzeugs, das in dem Schneidwerkzeugsitz (123) aufgenommen ist, richtbar ist und
- zumindest einen unteren Kühlschmiermittelkanal (195) aufweist, der in einer unteren Austrittsöffnung (17) mündet, die an einer Stirnfläche (122') des Halterkörpers (1') vorliegt und so ausgerichtet ist, dass ein Kühlschmiermittelstrahl, der aus dem Kühlschmiermittelkanal (195) austritt, von unten auf die Schnittkante des Schneidwerkzeugs, das in dem Schneidwerkzeugsitz (123) aufgenommen ist, richtbar ist.

2. Abstechhalter (1) nach Anspruch 1,
**dadurch gekennzeichnet, dass**
der Halterkörper (1') zumindest eine Zuführöffnung (14) für Kühlschmiermittel aufweist, die bevorzugt in dem Einspannabschnitt (11) vorliegt,
wobei die Zuführöffnung (14) mit einer Kühlschmiermittelquelle fluidisch verbindbar ist und sich der Kühlochmicrmittelkanal (193) von der Zuführöffnung (14) zu der Austrittsöffnung (18a,18b) erstreckt.

3. Abstechhalter (1) nach Anspruch 1 oder 2,
**dadurch gekennzeichnet, dass**
der Kühlschmiarmittelkanal (193) zumindest eine Umlenkung aufweist, die bevorzugt verrundet ist,

4. Abetechhaiter (1) nach zumindest einem der Ansprüche 1 bis 3,
**dadurch gekennzeichnet, dass**
der obere Kühlschmiermittelkanal (194) und/oder der untere Kühlschmiermittelkanal (195) aus einer Verzweigung eines gemeinsamen Kühlschmiermittelkanalabschnitts, insbesondere des ersten Kühlschmiermittelkanals (19,193) hervorgeht/hervorgehen und/oder
- zumindest einer der Kühlschmiermittelkanäle (193,194,195) einen nichtkreisförmigen Querschnitt hat, bevorzugt einen ovalen oder einen rechteckigen Querschnitt, am meisten bevorzugt einen flach ovalen oder flach rechteckigen Querschnitt.

5. Abstechhalter (1) nach zumindest einem der Ansprüche 1 bis 4,
**dadurch gekennzeichnet, dass**
sich von dem Schneidwerkzeugsitz (123) ein Schlitz (124) in dem Halterkörper (1') erstreckt, dessen Erstreckungsrichtung parallel zu einer Aufnahmeebene des Schneidwerkzeugs verläuft,

6. Herstellverfahren für einen Abstechhalter(1) nach zumindest einem der Ansprüche 1 bis 5 unter Verwendung einer generativen Fertigungsvorrichtung, umfassend die Schritte
a) in die generative Fertigungsvorrichtung Laden eines 3D-Volumendatensatzes, der den Halterkörper (1') des Abstechhalters(1) beschreibt,
b) Bereitstellen eines pulverförmigen Ausgangsmaterials
c) schrittweise Herstellen eines Materialzusammenhalts des pulverförmigen Ausgangsmaterials, dabei schrittweise Herstellen des plattenförmigen Halterkörpervolumens (1') mit
- dem zumindest einem Kühlschmiermittelkanal (193), der zumindest eine Austrittsöffnung (18a,18b) hat, die an einer Seitenfläche (122") des Halterkörpers schräg aus der Seitenfläche (122") austritt und so ausgerichtet ist, dass ein Kühlschmiermittelstrahl (K), der aus dem Kühlschmiermittelkanal (193) austritt, seitlich von unten auf eine Fläche eines Schneidwerkzeugs, das in dem Schneidwerkzeugsitz (123) aufgenommen ist, richtbar ist, wobei jeweils eine Austrittsöffnung (18a, 18b) an voneinander abgewandten Wandabschnitten der Seitenflächen (122") unter dem Schneidwerkzeugsitz (123) vorliegt, und
- mit dem zumindest einen oberen Kühlschmiermittelkanal (194), der in einer oberen Austrittsöffnung (16) mündet, die an einer Stirnfläche (122') des Hatterkörpers (1') vorliegt und so ausgerichtet ist, dass ein Kühlschmiermittelstrahl, der aus dem Kühlschmiermittelkanal (194) austritt, von oben auf eine Schnittkante eines Schneidwerkzeugs, das in dem Schneidwerkzeugsitz (123) aufgenommen ist, richtbar ist, und mit
- dem zumindest einen unteren Kühlschmiermittelkanal (195), der in einer unteren Austrittsöffnung (17) mündet, die an einer Stirnfläche (122') des Halterkörpers (1') vorliegt und so ausgerichtet ist, dass ein Kühlschmiermittelstrahl, der aus dem Kühlschmiermittelkanal (195) austritt, von unten auf die Schnittkante des Schneidwerkzeugs, das in dem Schneidwerkzeugsitz (123) aufgenommen ist, richtbar ist.

7. Herstellvarfahren nach Anspruch 6,
wobei in dem Schritt c) Aufschmelzen des pulverförmigen Ausgangsmaterials ausgeführt wird.

8. Herstellverfahren nach Anspruch 6 oder 7,
**dadurch gekennzeichnet, dass**
- das pulverförmige Ausgangsmaterial ein Metallpulver ist und/oder
- die generative Fertigungsvorrichtung eine Vorrichtung zum selektiven Laserschmelzen oder selektiven Lasersintern ist.

## Claims

1. A cutoff holder (1), comprising
- a plate-type holder body (1') which includes a cutting tool seat (123), and
- a clamping section (11) for clamping the cutoff holder (1) into a machine tool, wherein
- at least one first cooling lubricant channel (193) is disposed in the holder body (1'), said first cooling lubricant channel (193) including at least one exit opening (18a, 18b) on a lateral surface (122") of the holder body and exiting the lateral surface (122") at an angle,
- wherein one outlet opening (18a, 18b) each is provided below the cutting tool seat (123) at wall sections of the lateral surfaces (122"), the wall sections facing away from each other,
- wherein the exit opening (18a, 18b) is aligned in such a manner that a cooling lubricant jet (K) which exits the cooling lubricant channel (193) can be directed towards a surface of a cutting tool from the side from below, said cutting tool being received in the cutting tool seat (123), and wherein the holder body (1')
- comprises at least one upper cooling lubricant channel (194) which ends in an upper exit opening (16), said exit opening (16) being disposed on a front face (122') of the holder body (1') and being aligned in such a manner that a cooling lubricant jet exiting the cooling lubricant channel (194) can be directed towards a cutting edge of a cutting tool from above, said cutting tool being received in the cutting tool seat (123), and
- comprises at least one lower cooling lubricant channel (195) which ends in a lower exit opening (17), said exit opening (17) being disposed on a front face (122') of the holder body (1') and being aligned in such a manner that a cooling lubricant jet exiting the cooling lubricant channel (195) can be directed towards the cutting edge of the cutting tool from below, said cutting tool being received in the cutting tool seat (123).

2. The cutoff holder (1) according to Claim 1,
**characterized in that**
the holder body (1') includes at least one feed opening (14) for cooling lubricants, said feed opening (14) preferably being disposed in the clamping section (11),
wherein the feed opening (14) can be put into fluid communication with a cooling lubricant source and the cooling lubricant channel (193) extends from the feed opening (14) to the exit opening (18a, 18b).

3. The cutoff holder (1) according to Claim 1 or 2,
**characterized in that**
the cooling lubricant channel (193) includes at least one deflection which, preferably, is rounded.

4. The cutoff holder (1) according to at least any one of Claims 1 to 3,
**characterized in that**
the upper cooling lubricant channel (194) and/or the lower cooling lubricant channel (195) emerge/emerges from a bifurcation of a common cooling lubricant channel section, more particularly of the first cooling lubricant channel (19, 193) and/or
- at least one of the cooling lubricant channels (193, 194, 195) has a non-circular cross-section, preferably an oval or a rectangular cross-section, most preferably a flat oval or a flat rectangular cross-section.

5. The cutoff holder (1) according to at least any one of Claims 1 to 4,
**characterized in that**
starting from the cutting tool seat (123), a slot (124) extends in the holder body (1'), the slot (124) extending in a direction parallel to a receiving plane of the cutting tool.

6. A production method for a cutoff holder (1) according to at least any one of Claims 1 to 5 using a generative production apparatus, comprising the steps of
a) loading a 3D volume data set to the generative production apparatus, said set describing the holder body (1') of the cutoff holder (1),
b) providing a powdery basic material,
c) producing step by step a material binding of the powdery basic material, therein producing step by step the plate-type holder body volume (1') comprising
- the at least one cooling lubricant channel (193) which includes at least one exit opening (18a, 18b) which is disposed on a lateral surface (122") of the holder body and exits the lateral surface (122") at an angle, and is directed in a manner that a cooling lubricant jet (K) which exits the cooling lubricant channel (193) can be directed towards a surface of a cutting tool from the side from below, wherein one outlet opening (18a, 18b) each is provided below the cutting tool seat (123) at wall sections of the lateral surfaces (122"), the wall sections facing away from each other,- comprising the at least one upper cooling lubricant channel (194) which ends in an upper exit opening (16), said exit opening (16) being disposed on a front face (122') of the holder body (1'), and being directed in a manner such that a cooling lubricant jet (K) which exits the cooling lubricant channel (194) can be directed from above towards a cutting edge of a cutting tool that is comprised in a cutting tool seat (123), and comprising
- the at least one lower cooling lubricant channel (195) which ends in a lower exit opening (17), said exit opening (17) being disposed on a front face (122') of the holder body (1') and being directed in a manner such that a cooling lubricant jet (K) which exits the cooling lubricant channel (195) can be directed from below towards a cutting edge of a cutting tool that is comprised in a cutting tool seat (123).

7. The production method according to Claim 6,
wherein melting of the powdery basic material is carried out in step c).

8. The production method according to Claim 6 or 7,
**characterized in that**
- the powdery basic material is a metal powder and/or
- the generative production apparatus is an apparatus for selective laser melting or selective laser sintering.

## Revendications

1. Support à tronçonner (1) avec
- un corps de support en forme de plaque (1') qui présente un siège d'outil de coupe (123) et
- une section de serrage (11) pour serrer le support à tronçonner (1) dans une machine-outil, dans lequel
- au moins un premier canal de lubrifiant caloporteur (193) est présent dans le corps de support (1'), lequel présente au moins une ouverture de sortie (18a, 18b) sur une face latérale (122") du corps de support et sort en biais de la face latérale (122"), dans lequel une l'ouverture de sortie (18a, 18b) dans chaque cas existe a sections des murs des faces latérales (122") dont les sections des murs sont détournées l'une de l'autre sous le siège d'outil de coupe (123),
- dans lequel l'ouverture de sortie (18a, 18b) est orientée de sorte qu'un jet de lubrifiant caloporteur (K) qui sort du canal de lubrifiant caloporteur (193) peut être dirigé latéralement par le bas sur une face d'un outil de coupe qui est reçu dans le siège d'outil de coupe (123),
dans lequel le corps de support (1')
- présente au moins un canal de lubrifiant caloporteur supérieur (194) qui débouche dans une ouverture de sortie supérieure (16) qui est présente sur une face frontale (122') du corps de support (1') et est orientée de sorte qu'un jet de lubrifiant caloporteur qui sort du canal de lubrifiant caloporteur (194) peut être dirigé du haut sur une arête de coupe d'un outil de coupe qui est reçu dans le siège d'outil de coupe (123) et
- présente au moins un canal de lubrifiant caloporteur inférieur (195) qui débouche dans une ouverture de sortie inférieure (17) qui est présente sur une face frontale (122') du corps de support (1') et est orientée de sorte qu'un jet de lubrifiant caloporteur qui sort du canal de lubrifiant caloporteur (195) peut être dirigé du bas sur l'arête de coupe de l'outil de coupe qui est reçu dans le siège d'outil de coupe (123).

2. Support à tronçonner (1) selon la revendication 1,
**caractérisé en ce que**
le corps de support (1') présente au moins une ouverture d'amenée (14) pour lubrifiant caloporteur qui est de préférence présente dans la section de serrage (11), dans lequel l'ouverture d'amenée (14) peut être reliée de manière fluidique à une source de lubrifiant caloporteur et le canal de lubrifiant caloporteur (193) s'étend de l'ouverture d'amenée (14) à l'ouverture de sortie (18a, 18b).

3. Support à tronçonner (1) selon la revendication 1 ou 2,
**caractérisé en ce que**
le canal de lubrifiant caloporteur (193) présente au moins un coudage qui est de préférence arrondi.

4. Support à tronçonner (1) selon au moins une des revendications 1 à 3,
**caractérisé en ce que**
le canal de lubrifiant caloporteur supérieur (194) et/ou le canal de lubrifiant caloporteur inférieur (195) est/sont issu(s) d'une ramification d'une section de canal de lubrifiant caloporteur commune, notamment du premier canal de lubrifiant caloporteur (19, 193) et/ou
- au moins un des canaux de lubrifiant caloporteur (193, 194, 195) a une section transversale non circulaire, de préférence une section transversale ovale ou rectangulaire, de manière préférée entre toutes une section transversale ovale plate ou rectangulaire plate.

5. Support à tronçonner (1) selon au moins une des revendications 1 à 4,
**caractérisé en ce que**
une fente (124) dont la direction d'extension s'étend parallèlement à un plan de réception de l'outil de coupe s'étend du siège d'outil de coupe (123) dans le corps de support (1').

6. Procédé de fabrication pour un support à tronçonner (1) selon au moins une des revendications 1 à 5 en utilisant un dispositif de fabrication assisté par ordinateur, **comprenant les étapes**
a) dans le dispositif de fabrication assisté par ordinateur, chargement d'un ensemble de données de volume 3D qui décrit le corps de support (1') du support à tronçonner (1),
b) mise à disposition d'un matériau de départ pulvérulent,
c) fabrication par étape d'un assemblage de matériau du matériau de départ pulvérulent, fabrication par étape ce faisant du volume de corps de support en forme de plaque (1') avec
- l'au moins un canal de lubrifiant caloporteur (193) qui a au moins une ouverture de sortie (18a, 18b) qui sort en biais d'une face latérale (122") sur la face latérale (122") du corps de support et est orientée de sorte qu'un jet de lubrifiant caloporteur (K) qui sort du canal de lubrifiant caloporteur (193) peut être dirigé latéralement par le bas sur une face d'un outil de coupe qui est reçu dans le siège d'outil de coupe (123), dans lequel une l'ouverture de sortie (18a, 18b) dans chaque cas existe a sections des murs des faces latérales (122") dont les sections des murs sont détournées l'une de l'autre sous le siège d'outil de coupe (123), et
- avec l'au moins un canal de lubrifiant caloporteur supérieur (194) qui débouche dans une ouverture de sortie supérieure (16) qui est présente sur une face frontale (122') du corps de support (1') et qui est orientée de sorte qu'un jet de lubrifiant caloporteur (K) qui sort du canal de lubrifiant caloporteur (194) peut être dirigé par le haut sur un arête de coupe d'un outil de coupe qui est reçu dans le siège d'outil de coupe (123), et avec
- l'au moins un canal de lubrifiant caloporteur inférieur (195) qui débouche dans une ouverture de sortie inférieure (17) qui est présente sur une face frontale (122') du corps de support (1') et qui est orientée de sorte qu'un jet de lubrifiant caloporteur (K) qui sort du canal de lubrifiant caloporteur (195) peut être dirigé par le bas sur un arête de coupe d'un outil de coupe qui est reçu dans le siège d'outil de coupe (123).

7. Procédé de fabrication selon la revendication 6,
dans lequel une fusion du matériau de départ pulvérulent est réalisée à l'étape c).

8. Procédé de fabrication selon la revendication 6 ou 7,
**caractérisé en ce que**
- le matériau de départ pulvérulent est une poudre métallique et/ou
- le dispositif de fabrication assisté par ordinateur est un dispositif pour la fusion sélective par laser ou le frittage sélectif par laser.
